# EUROPÄISCHE PATENTANMELDUNG

(11) **EP 1 050 748 A1**
(43) Veröffentlichungstag der Anmeldung: **08.11.2000**
(21) Anmeldenummer: 00109594.2
(22) Anmeldetag: 05.05.2000
(51) Int. Cl.: G01G 3/14, G01G 3/147, G01L 1/22

(54) **Dehnungsmesstreifen-Aufnehmer**

(30) Priorität: 07.05.1999 DE 19921174
(71) Anmelder: HBM Mess- und Systemtechnik GmbH, 64293 Darmstadt (DE)
(72) Erfinder: Kreuzer, Manfred, 64331 Weiterstadt (DE)
(74) Vertreter: Behrens, Helmut, Dipl.-Ing.

(57) **Zusammenfassung**

Die Erfindung betrifft einen Dehnungsmeßstreifen-Aufnehmer mit einem Krafteinleitungsteil (2), einem Kraftaufnahmeteil (6) und dazwischen angeordneten biegeelastischen Verformungselementen (5, 16, 17, 18), die mit mehreren halbbrückenartig verschalteten Dehnungsmeßstreifen (7, 8; 12, 13) appliziert sind. Dabei werden die vorgegebenen Halbbrückenschaltungen (H1 bis H4), die Dehnungen in Hauptmeßrichtung (15) und Dehnungen in davon abweichenden Richtungen erfassen können, getrennten Vorverstärkerschaltungen (V1 bis V6; V1 bis V8) zugeführt und verstärkt. Die verstärkten und digitalisierten Meßsignale werden in einer nachfolgenden Mikroprozessorschaltung (20) so miteinander verknüpft, daß am Ausgang sowohl die Einzelkräfte oder -momente als auch die Gesamtkräfte oder Momente abrufbar zur Verfügung stehen.

## Beschreibung

Die Erfindung betrifft einen Dehnungsmeßstreifen-Aufnehmer gemäß dem Oberbegriff des Patentanspruchs 1.

Bei derartigen Aufnehmern sind meist mindestens zwei Dehnungsmeßstreifen auf den Biegeelementen der Aufnehmer angeordnet, wobei diese zu Halbbrücken verschaltet sind und zur Meßsignalauswertung mindestens eine Vollbrücke bilden. Bei derartigen Aufnehmern werden häufig aber auch acht und mehr Dehnungsmeßstreifen auf den Biegeelementen der Aufnehmer appliziert, wobei meist zwei Dehnungsmeßstreifen eines Biegeelementes zu einer Halbbrücke verschaltet sind. Je nach Anordnung der Dehnungsmeßstreifen auf den Biegeelementen werden diese entsprechend der vorgegebenen Biegerichtung zu einer oder mehreren Vollbrücken verschaltet. Da mit derartigen Aufnehmern Kräfte, Drehmomente oder Drücke gemessen werden sollen, werden die Halb- oder Vollbrücken so verschaltet, daß am Ausgang nur das in Hauptbelastungsrichtung liegende Gesamtsignal einer passiven Brückenschaltung zur Verfügung steht. Obwohl in diesem Aufnehmern meist mehr als vier Dehnungsmeßstreifen appliziert sind, werden diese immer nur zu einer einzigen passiven Vollbrücke verschaltet.

Bei verschiedenen Präzisionsaufnehmern wie den rotationssymmetrischen Einfach- oder Doppelbiegebalkenaufnehmern werden meist auf den vier- oder achtfach vorhandenen Biegebalken 8 bis 32 Dehnungsmeßstreifen appliziert und dann zu einer Vollbrücke verschaltet. Auch bei stab- und membranförmigen Meßkörpern werden meist mehr als vier Einzeldehnungsmeßstreifen oder mehr als zwei Dehnungsmeßstreifen-Halbbrücken eingesetzt, um bessere Meßeigenschaften, insbesondere gegenüber Querkrafteinflüssen, Biegemomenten und Rotationsfehlern zu erzielen. Dabei werden die in verschiedenen Brückenzweigen geschalteten Dehnungsmeßstreifen so angeordnet, daß sich die nicht in Meßrichtung verlaufenden störenden Biegemomente oder Querkräfte wegen der zwangsläufig entgegengesetzen Biegerichtung kompensieren. Da diese meßfehlerverursachenden Kräfte oder Momente durch die Kompensation zwar im Meßergebnis nur noch wenig oder nicht mehr erscheinen, sind sie aber dennoch vorhanden und können deshalb auch zu kaum analysierbaren Fehlern und Beschädigungen am Aufnehmer führen.

Der Erfindung liegt deshalb die Aufgabe zugrunde, ein der eingangs genannten Aufnehmer so zu verbessern, daß die Genauigkeit dadurch erhöht wird, daß aus dem Meßergebnis die Störgrößen und deren Ursachen feststellbar sind. Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch die Verstärkung der einzelnen Halb- oder Vollbrücken sich die Gesamtamplitude in der Hauptmeßrichtung linear erhöht, während sich die Rauschspannungsamplitude nur mit der Wurzel der beteiligten Meßkanäle erhöht. Werden somit 16 aktive Einzeldehnungsmeßstreifen zu vier unabhängigen Vollbrücken verschaltet und deren Ausgangssignale dann elektronisch addiert, so erhöht sich die Signalamplitude um den Faktor vier während sich das Rauschsignal nur um den Faktor zwei vergrößert, so daß sich die Auflösung insgesamt um den Faktor zwei verbessert.

Der Erfindung liegt weiterhin der Vorteil zugrunde, daß durch die halbbrückenweise Messung der Verformungskräfte in bestimmten Aufnehmerabschnitten alle Krafteinflüsse nach deren Komponenten analysierbar sind, so daß deren Ursache feststellbar ist. Dadurch kann insbesondere bei Kraftmessungen die Güte der Krafteinleitung beurteilt werden oder auch störende Einflüsse so rechnerisch berücksichtigt werden, daß sie keinen Einfluß mehr auf das Meßergebnis haben.

Darüber hinaus bietet die Erfindung noch den Vorteil, daß durch die Messung der einzelnen Kraftkomponenten in den verschiedenen Biegezonen des Aufnehmers auch die Biegemomente und Querkräfte genau bestimmbar sind, so daß eine Überlastung durch derartige Kräfte und Momente durch Verhinderung der Entstehung dieser Ursachen vermeidbar ist, ohne daß aufwendige Überlastsicherungen nötig wären.

Die Erfindung wird anhand eines Ausführungsbeispiels, das in der Zeichnung dargestellt ist, näher erläutert. Es zeigen:
- Fig. 1:: Einen Dehnungsmeßstreifen-Aufnehmer als rotationssymmetrischer Einfachbiegebalken in Draufsicht;
- Fig. 2:: einen Dehnungsmeßstreifen-Aufnehmer als Schnittbild in Seitenansicht;
- Fig. 3:: ein elektrisches Schaltbild des Aufnehmers mit acht aktiven Halbbrücken, und
- Fig. 4:: ein elektrisches Schaltbild des Aufnehmers mit acht aktiven und einer passiven Halbbrücke.

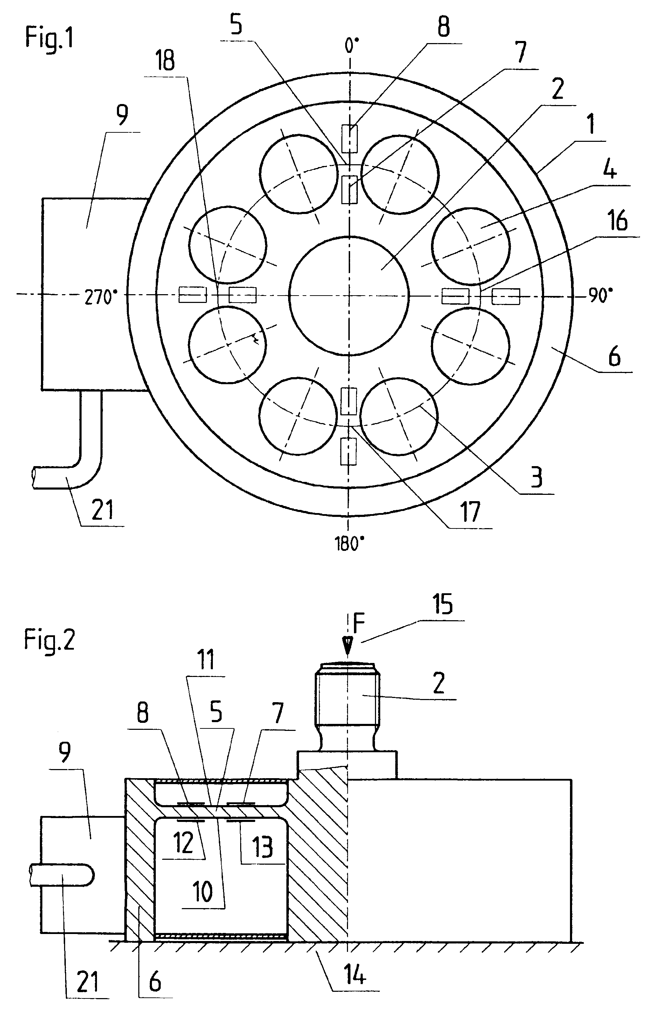

In Fig. 1 der Zeichnung ist ein Dehnungsmeßstreifen-Aufnehmer dargestellt, der als rotationssymmetrischer Einfachbiegebalken ausgebildet ist, wobei dieser über vier 90° versetzt angeordnete Verformungsstege 5, 16, 17, 18 verfügt, die beidseitig mit halbbrückenartig verschalteten Dehnungsmeßstreifen 7, 8 appliziert sind und jeweils einem separaten Verstärkerkanal zugeführt werden, die in einer weiteren elektronischen Meßschaltung einzeln oder insgesamt auswertbar sind.

Der Dehnungsmeßstreifen-Aufnehmer ist als kreisrunde Platte 1 ausgebildet, die im Zentrum ein bolzenartiges Krafteinleitungselement 2 besitzt. Um dieses Krafteinleitungselement 2 sind auf einem Teilkreis 3 acht Bohrungen 4 angeordnet. Die Bohrungen 4 sind gegeneinander um 45° versetzt. Hierdurch entstehen acht radial versetzte biegeelastische Stege 5, 16, 17, 18, die das Krafteinleitungselement 2 mit einem am äußeren Rand angeordneten Kraftaufnahmeelement 6 verbindet. Das Kraftaufnahmeelement 6 ist als Außenring ausgebildet, der sich mit einer ringförmigen Aufstandsfläche auf einer Unterlage 14 abstützt.

Auf jeweils vier der acht Stege 5, 16, 17, 18 sind Dehnungsmeßstreifen 7, 8, 12, 13 beidseitig appliziert, wobei die mit Dehnungsmeßstreifen applizierten Stege 5, 16, 17, 18 jeweils um 90° versetzt sind. Auf jedem der biegeelastischen Stege 5, 16, 17, 18 sind auf jeder Seite 10, 11 zwei Dehnungsmeßstreifen 7, 8; 12, 13 appliziert, wobei diese so angeordnet sind, daß sie sich in radialer Richtung in den beiden Bereichen mit maximaler Ausbiegung bzw. Stauchung befinden. Die beiden auf einer Stegseite 10, 11 angebrachten Dehnungsmeßstreifen 7, 8; 12, 13 sind zu einer Wheatstone'schen Halbbrücke verschaltet und einer Auswerteelektronik als Meßelektronik zugeführt, die in einem Gehäuse 9 am Außenring 6 des Aufnehmers angeordnet ist.

In Fig. 2 der Zeichnung ist der Dehnungsmeßstreifen-Aufnehmer als Schnittbild in Seitenansicht dargestellt. Die bereits nach Fig. 1 beschriebenen Teile sind mit den selben Bezugsziffern bezeichnet. In Fig. 2 sind insbesondere die biegeelastischen Stege 5 dargestellt, die gegenüber der Bauhöhe verhältnismäßig dünn ausgebildet sind und bei Krafteinleitung sich s-förmig ausbiegen. Die Dehnungsmeßstreifen 7, 8; 12, 13 auf jeder Stegseite 10, 11 sind gegenüberliegend angeordnet und erfahren aufgrund der vorgegebenen Ausbiegung eine gegenläufige Widerstandsänderung. So erfährt der im ersten Steg 5 zum Krafteinleitungselement 2 oben angeordnete Dehnungsmeßstreifen 7 bei Krafteinleitung eine Stauchung, wobei der gegenüberliegende untere Dehnungsmeßstreifen 13 gedehnt wird. Hingegen erfährt der außen liegende obere Dehnungsmeßstreifen 8 eine Dehnung, wobei der gegenüberliegende untere Dehnungsmeßstreifen 12 gestaucht wird. Bei einer axialen Krafteinleitung in der Hauptmeßrichtung 25 werden auch die übrigen drei Stege 16, 17, 18 in der selben Weise belastet. Hingegen tritt eine unterschiedliche Dehnung und Stauchung in den Dehnungsmeßstreifen auf, wenn auch Kraftkomponenten bzw. Momente vorhanden sind, die nicht nur in der Hauptmeßrichtung 15 verlaufen. Bei derartigen Biegemomenten bzw. Querkräften können die Biegewirkungen in den gegenüberliegenden Stegen 5, 17; 16, 18 auch genau gegensätzlich sein, so daß in jedem Steg oder nur in bestimmten Stegen unterschiedliche Biegewirkungen feststellbar sind.

In dem vorbeschriebenen Ausführungsbeispiel sind Kraftkomponenten in allen vier Hauptbiegerichtungen, die um 90° versetzt angeordnet sind, erfaßbar. Deshalb sind insgesamt sechzehn Dehnungsmeßstreifen 7, 8, 12, 13 vorgesehen, mit der die Güte der Krafteinleitung bereits relativ genau feststellbar ist. Es können aber auch noch die acht anderen Stege mit Dehnungsmeßstreifen bestückt und zur Auswertung herangezogen werden. Auf ähnliche Weise könnte auch bei einem rotationssymmetrischen Doppelbiegebalken vorgegangen werden, bei dem in axialer Richtung statt einem zwei parallele Stege in unterschiedlicher axialer Höhe vorgesehen sind.

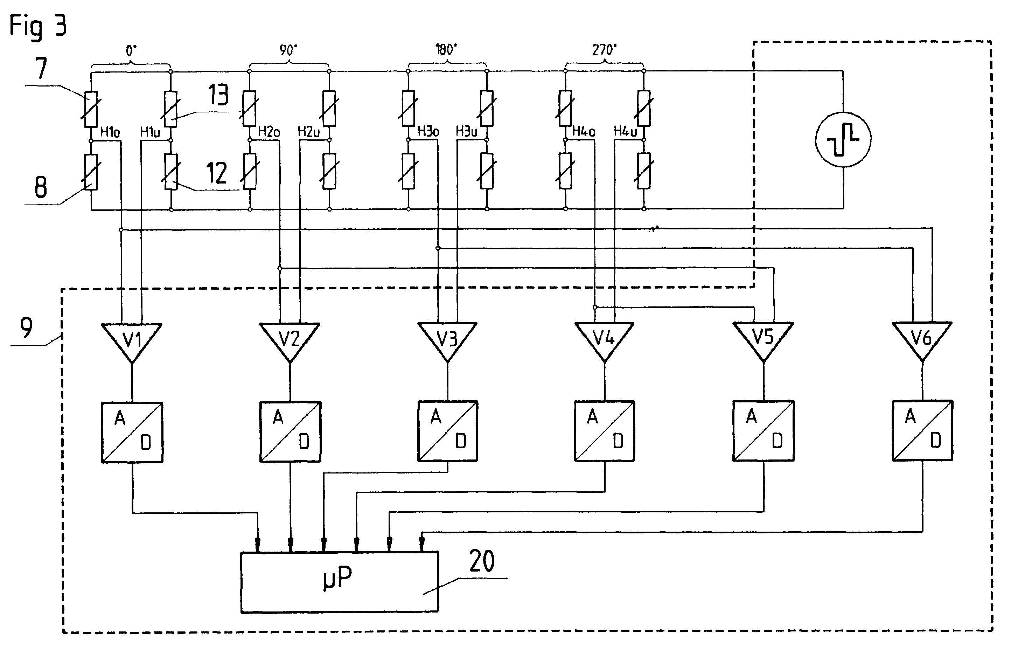

In Fig. 3 der Zeichnung ist das elektrische Schaltbild des Dehnungsmeßstreifen-Aufnehmers nach Fig. 1 und 2 dargestellt. Auf den vier oberen Stegseiten 11 ist jeweils eine aktive Halbbrücke H1_{O}, H2_{O}, H3_{O} und H4_{O} geschaltet, wobei auf der unteren Stegseite 10 die aktiven Halbbrücken Hl_{U}, H2_{U}, H3_{U} und H4_{U} vorgesehen sind. Dabei werden jeweils zwei Halbbrücken einem getrennten Meßverstärker V1 bis V6 zugeführt, und separat verstärkt. Die Dehnungsmeßstreifen-Halbbrücken H1 bis H4 sind alle an einer gemeinsamen Speisespannung 19 angeschlossen, wodurch sie mit einer Rechteckspannung versorgt werden. Diese wird von außen zugeführt und über eine Leitung dem Gehäuse 9 der Meßelektronik zugeführt.

Ausgangsseitig sind die einzelnen Meßkanäle V1 bis V6 mit einem A/D-Wandler (Analog-Digital-Wandler) verbunden, der die analogen Meßsignale in Digitalwerte umwandelt und einer Mikroprozessorschaltung (µP) zuführt. In der Mikroprozessorschaltung 20 werden die einzelnen Meßsignale so verknüpft, daß mindestens die Kraft in Hauptmeßrichtung 15 als auch die Biegemomente bei 0° und 90° oder entsprechende Querkräfte am Ausgang als Digitalwert anliegen und zur Ausgabe oder Weiterverarbeitung über eine entsprechende Schnittstelle anzeigbar zur Verfügung stehen.

Mit einer derartigen Schaltung kann nicht nur die Kraft in der Hauptmeßrichtung 15, die Biegemomente und die Querkräfte ermittelt werden, sondern über eine definierte Krafteinleitung kann der Dehnungsmeßstreifen-Aufnehmer auch rechnerisch kalibriert und dadurch die Fertigungsungenauigkeiten sowie Kriech-, Linearitäts- und Temperaturfehler ausgeglichen werden. Dazu sind bei den Meßkanälen V1 bis V4 jeweils die Dehnungsmeßstreifen-Halbbrücken H1 bis H4 von den einzelnen Stegseiten 10, 11 oben und unten den beiden gegenpoligen Verstärkereingängen zugeführt, so daß damit die Kraftkomponenten in Hauptmeßrichtung 15 erfaßbar sind. Werden die verstärkten Meßsignale der Meßkanäle V1 bis V4 in der Mikroprozessorschaltung 20 addiert, erhält man daraus die Gesamtkraft in Hauptmeßrichtung 15, die eine Kraft, ein Gewicht, ein Moment oder ein Druck darstellen kann.

Durch die symmetrische Anordnung der Halbbrücken H 1 bis H4 zum Krafteinleitungselement 2 werden hierbei eventuell vorkommende Biegemomente oder Querkräfte kompensiert, da diese Kraftkomponenten auf den radial gegenüberliegenden Stegen 5, 17; 16, 18 gegenläufig und in der Regel in der gleichen Größe auftreten. Deshalb sind auf dem Meßkanal V5 die Halbbrücken H2_{O} und H4_{O} so geschaltet, daß sich die in den Stegen 16 und 18 auftretenden Komponenten der Momente bzw. Querkräfte addieren und damit meßbar sind. Durch den Meßkanal V6 sind hingegen die um 90° versetzten Querkräfte und Momente in den Stegen 5 und 17 feststellbar ,da sich die Kraftkomponenten in diesen gegenüberliegenden Stegen 5, 17 addieren. Durch die Verknüpfung der Kraft in der Hauptmeßrichtung 15 mit den Komponenten und Richtungen der Querkräfte bzw. Momente kann damit auf vorteilhafte Art und Weise die Güte der Krafteinleitung beurteilt werden. Eine nicht nur in Hauptmeßrichtung 15 verlaufende Krafteinleitung kann deshalb leicht durch eine Richtungskorrektur oder Änderung der die Querkraft erzeugenden Befestigungsmittel so lange verändert werden, bis keine Momente oder Querkräfte mehr auftreten und somit nur noch die gewünschten Kräfte in Hauptmeßrichtung 15 wirken und wodurch das Meßergebnis nicht mehr verfälscht oder der Aufnehmer nicht mehr beschädigt werden kann.

Bei einer definierten und geeichten Krafteinleitung können auf einfache Art und Weise auch die Dehnungsmeßstreifen-Aufnehmer in ihrer Meßgenauigkeit verbessert werden. Dabei kann bei einer definierten Krafteinleitung mit verschiedenen Kräften und Richtungen diese sowohl in Hauptmeßrichtung 15 als auch in den um 90° versetzten Richtungen gemessen und mit den vorgegebenen definierten Kräften verglichen werden. Daraus sind in der Mikroprozessorschaltung 20 Korrekturwerte errechenbar, die mögliche Fertigungsungenauigkeiten und dergleichen berücksichtigen. Diese Werte sind in der Mikroprozessorschaltung 20 speicherbar und bei jeder Messung wieder abrufbar, so daß die Meßergebnisse um die ermittelte Meßungenauigkeit jeweils korrigiert werden. Auf diese Weise können auch nach längeren Zeitabständen auftretende Meßungenauigkeiten noch korrigiert werden, wie beispielsweise bei kriechbedingten Meßfehlern.

Die im Schaltbild nach Fig. 3 der Zeichnung dargestellte Schaltung wird in einem Gehäuse 9 der Auswerteelektronik geschaltet. Dabei besteht die Auswerteelektronik sowohl aus den Verstärkerschaltungen V1 bis V6, den A/D-Wandlern und der Mikroprozessorschaltung 20. Das Elektronikgehäuse 9 ist mit einem Anschlußkabel 21 verbunden, das zur Stromversorgung dient und über entsprechende Schnittstellen den Mikroprozessor 20 mit weiteren Auswerte- und Anzeigeschaltungen verbindet.

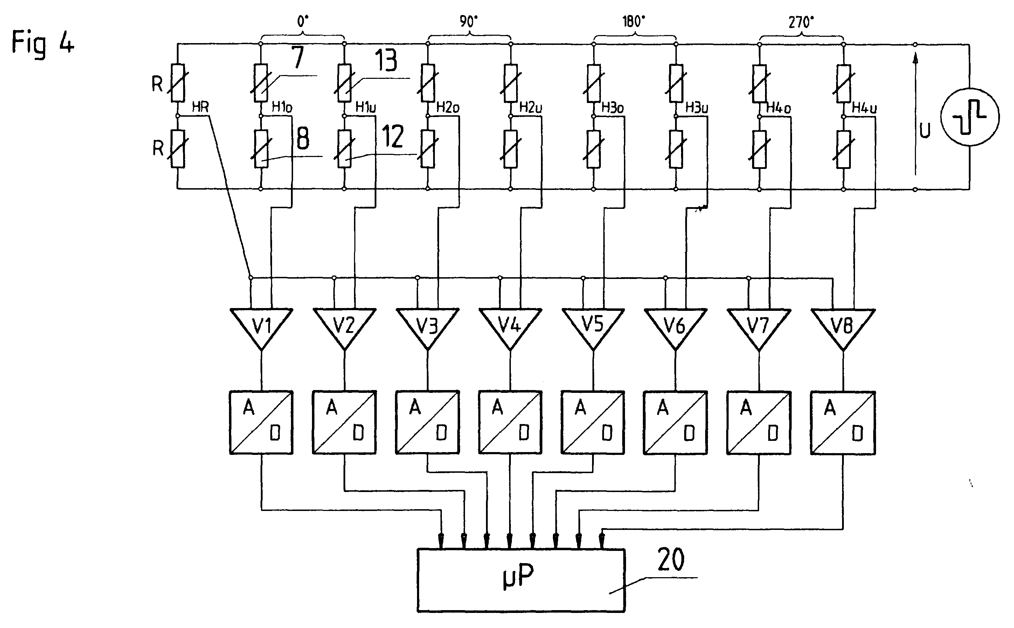

In Fig. 4 der Zeichnung ist das elektrische Schaltbild eines Dehnungsmeßstreifen-Aufnehmers dargestellt, nach dem auch jeder Biegesteg einzeln auswertbar ist. Dabei unterscheidet sich die Ausführung nach Fig. 4 der Zeichnung von der nach Fig. 3 nur durch die elektronische Schaltung, hingegen ist der Aufnehmer mit den applizierten Dehnungsmeßstreifen mit dem nach den Fig. 1 bis Fig. 3 beschriebenen identisch.

Zusätzlich zu den acht aktiven Halbbrücken (H1_{O} bis H4_{O} und H1_{U} bis H4_{U}) der Ausführung nach den Fig. 1 bis Fig. 3 ist noch eine passive Halbbrücke H_{R} mit zwei Referenzwiderständen R vorgesehen. Diese Referenzhalbbrücke H_{R} ist mit jeder der acht aktiven Halbbrücken (H1_{O} bis H4_{O} und H1_{U} bis H4_{U}) zu einer Vollbrücke verschaltet, wobei jede Vollbrücke im Meßzweig auf einen Opterationsverstärker V₁ bis V₈ als Vorverstärker geführt ist, der ausgangsseitig wieder mit einem A/D-Wandler verbunden ist. Die acht Operationsverstärker V₁ bis V₈ und die daran angeschlossenen A/D-Wandler sind weiterhin mit einem Mikroprozessor 20 verschaltet, in dem die Meßsignale jeder Halbbrücke eines Biegesteges 5, 16, 17, 18 einzeln oder mit anderen Halbbrücken des gleichen Biegesteges oder anderen Biegestegen gemeinsam auswertbar sind. Die Auswertung in der Mikroprozessorschaltung 20 erfolgt programmgesteuert nach vorgegebenen Rechenprogrammen.

Jede auf einen Vorverstärker V1 bis V8 geführte Vollbrücke liefert dabei ein Signal, das der Biegung bzw. der Kraftübertragung in dem Steg 5, 16, 17, 18 proportional ist, an den die aktive Halbbrücke angeordnet ist.

Mit Hilfe einer definierten Krafteinleitung mit einer oder mehrerer Referenzkräfte kann die Abweichung in jedem Steg 5, 16, 17, 18 und auf jeder Stegseite 10, 11 gegenüber den Referenzkräften ermittelt werden. Insbesondere können auf einfache Weise auch die Differenzsignale bei gegenüberliegenden Dehnungsmeßstreifen-Halbbrücken 7, 8; 12, 13 eines jeden Steges 5, 16, 17, 18 gebildet werden, um Fertigungsungenauigkeiten und unterschiedliches Kriechverhalten in diesem Steg 5 und gegenüber anderen Stegen 16, 17, 18 festzustellen. Die Unterschiede in und an den einzelnen Stegen 5, 16, 17, 18 können dann rechnerisch wie bereits zu Fig. 3 vorbeschreiben mittels Korrekturfaktoren für jede aktive Halbbrücke H1_{O} bis H4_{O} und H1_{U} bis H4_{U} oder jeden Steg 5, 16, 17, 18 kompensiert werden.

In der Mikroprozessorschaltung 20 können die einzelnen Signale auch so miteinander verknüpft werden, daß als Ergebnis die Kraft bzw. das Gewicht in der Hauptmeßrichtung 15 am Ausgang des Mikroprozessors 20 zur Verfügung steht. Dazu werden alle Meßsignale jeder Vollbrücke aufsummiert und digital ausgegeben.

Zur Ermittlung der Krafteinleitungsgüte oder zur Beurteilung anderer Meßwertfaktoren ist es auch möglich, parallel zur Ermittlung der Kraft in Hauptmeßrichtung 15 rechnerisch die Biegemomente und die Querkräfte in jedem Steg 5, 16, 17, 18 zu ermitteln. Zur Feststellung der Querkräfte werden der Mikroprozessorschaltung 20 die bekannten geometrischen Abmessungen des Aufnehmers vorgegeben, wodurch die zugehörigen Hebelwege rechnerisch festlegbar sind. Daraus sind in bekannter Weise beispielsweise die Querkräfte im 0°- und 90°-Bereich des Aufnehmers rechnerisch ermittelbar, die eine gute Beurteilung der Krafteinleitungsgüte ermöglichen. Dabei ist die Querkraft bzw. das Biegemoment im 0°-Bereich durch Addition der positiven Meßsignale in den Halbbrücken H1_{O} und H3_{U} und der negativen Meßsignale in den Halbbrücken H3_{O} und H1_{U} ermittelbar. Das Biegemoment bzw. Querkraft im 90°-Bereich ergibt sich hingegen aus der Addition der positiven Meßsignale in den Halbbrücken H2_{O} und H4_{U} und der negativen Meßsignale in den Halbbrücken H4_{O} und H2_{U}. Insbesondere durch die Ermittlung der Biegemomente bzw. Querkräfte in den einzelnen Stegen können die Biegemomente bzw. Querkräfte durch rechnerische Mittelwertberechnungen sehr genau bestimmt werden. Bei einer definierten Krafteinleitung können durch die Ermittlung aller Biegemomente und die Auswertung aller Halbbrückensignale auch symptomatische Fertigungsungenauigkeiten ermittelt und korrigiert werden. Durch die Auswertung der Meßsignale jedes Steges 5, 16, 17, 18 können auch Überlastungen durch große Biegemomente und Materialfehler in bestimmten Aufnehmerbereichen oder Fehler einzelner Dehnungsmeßstreifen 7, 8, 12, 13 erkannt und angezeigt werden.

## Patentansprüche

1. Dehnungsmeßstreiten-Aufnehmer mit einem Krafteinleitungsteil, einem Kraftaufnahmeteil und dazwischen angeordneten biegeelastischen Verformungselementen, die mit mehreren halbbrückenartig verschalteten Dehnungsmeßstreifen appliziert sind, dadurch gekennzeichnet, daß die einzelnen aktiven Halbbrücken (H1_{O} bis H4_{O} und H1_{U} bis H4_{U}) und/oder mehrere aus Halbbrücken verschaltete Vollbrücken getrennten Vorverstärkern (V1 bis V6; V1 bis V8) zugeführt und verstärkt werden, wobei die verstärkten Meßsignale als Summensignal, Einzelsignal und/oder daraus abgeleitete Werte am Ausgang einer Auswerteelektronik (20) zur Verfügung stehen.

2. Dehnungsmeßstreifen-Aufnehmer nach Anspruch 1, dadurch gekennzeichnet, daß vorgegebene aktive Halbbrücken (H1_{O} bis H4_{O} und H1_{U} bis H4_{U}) mit anderen vorgegebenen aktiven Halbbrücken (H1_{O} bis H4_{O} und H1_{U}, bis H4_{U}) oder einer oder mehreren passiver Halbbrücken (H_{R}) zu Vollbrücken verschaltet und separaten Vorverstärkern (V1 bis V8) zugeführt werden.

3. Dehnungsmeßstreifen-Aufnehmer nach Anspruch 1 oder 2, dadurch gekennzeichnet, daß die Dehnungen in Hauptmeßrichtung (15) durch vorgegebene Halbbrücken (H1_{O} bis H4_{O} und H1_{U} bis H4_{U}) erfaßt und getrennten Vorverstärkerstufen (V1 bis V4; V1 bis V8) zugeführt werden.

4. Dehnungsmeßstreifen-Aufnehmer nach einem der vorhergehenden Ansprüche, dadurch gekennzeichnet, daß die Dehnungen, die nicht in Hauptmeßrichtung (15) verlaufen, durch vorgegebene Halbbrücken (H2_{O}, H4_{O}, H3_{O}, H1_{O}, H1_{O}, H3_{U}, H3_{O}, H1_{U}; H2_{O}, H4_{U}, H4_{O}, H2_{U}) erfaßt und einzelnen getrennten Vorverstärkerstufen (V5, V6; V1, V6, V5, V2; V3, V8, V7, V4) zugeführt werden.

5. Dehnungsmeßstreifen-Aufnehmer nach einem der vorhergehenden Ansprüche, dadurch gekennzeichnet, daß die Ausgangssignale der Vorverstärkerstufen (V1 bis V6; V1 bis V8) in einer A/D-Wandler-Schaltung digitalisiert und einer Mikroprozessorschaltung (20) zur Auswertung zugeführt werden, die sowohl die Kräfte in Hauptmeßrichtung (15) als auch die von dieser Richtung abweichenden Kräfte bzw. Momente und/oder daraus abgeleitete Werte ermittelt und einzeln oder gemeinsam über eine digitale Schnittstelle und/oder zur Weiterverarbeitung am Ausgang zur Verfügung stellt.

6. Dehnungsmeßstreifen-Aufnehmer nach einem der vorhergehenden Ansprüche, dadurch gekennzeichnet, daß die Dehnungsmeßstreifen-Aufnehmer als rotationssymmetrische Einfachbiegebalken- (1), -Doppelbiegebalken oder als stabförmige-, membranförmig-, biegeringförmig ausgestaltete Meßkörper ausgebildet sind.

7. Dehnungsmeßstreifen-Aufnehmer nach einem der vorhergehenden Ansprüche, dadurch gekennzeichnet, daß die Biegebalken oder Meßkörper mit mindestens vier halbbrückenartig verschalteten Dehnungsmeßstreifen (7, 8; 12, 13) oder bis zu sechzehn und bis zu zweiunddreißig halbbrückenartig verschalteten Dehnungsmeßstreifen (7, 8; 12, 13) versehen sind.

8. Dehnungsmeßstreifen-Aufnehmer nach einem der vorhergehenden Ansprüche, dadurch gekennzeichnet, daß die Meßelektronikschaltung im oder am Biegebalken (1) oder den anderen Meßkörpern integriert oder angeordnet ist.

9. Dehnungsmeßstreifen-Aufnehmer nach einem der vorhergehenden Ansprüche, dadurch gekennzeichnet, daß die Meßelektronik so ausgebildet ist, daß sie sowohl die Kraft, das Gewicht, ein Drehmoment oder eine vergleichbare physikalische Größe in Hauptmeßrichtung (15) als auch die Biegemomente oder Querkräfte oder vergleichbare physikalische Werte ermittelt und einzeln oder gemeinsam über eine digitale Schnittstelle ausgibt.

10. Dehnungsmeßstreifen-Aufnehmer nach einem der vorhergehenden Ansprüche, dadurch gekennzeichnet, daß die Meßelektronik so ausgebildet ist, daß bei einer definierten Krafteinleitung daraus Korrekturwerte für einen zu kalibrierenden Aufnehmer errechnet werden, durch die bei zukünftigem Messungen fertigungs- und alterungsbedingte Meßfehler rechnerisch korrigierbar sind.
